# EUROPÄISCHE PATENTSCHRIFT

(11) **EP 1 922 890 B1**
(45) Veröffentlichungstag und Bekanntmachung des Hinweises auf die Patenterteilung: **21.01.2009**
(21) Anmeldenummer: 06776166.8
(22) Anmeldetag: 10.07.2006
(51) Int. Cl.: H04W 12/02, G06K 19/07

(54) **NACHTRÄGLICHES IMPLEMENTIEREN EINER SIM-FUKTIONALITÄT IN EINEM SICHERHEITSMODUL**
RETROSPECTIVE IMPLEMENTATION OF SIM CAPABILITIES IN A SECURITY MODULE
IMPLEMENTATION ULTERIEURE D'UNE FONCTIONNALITE SIM DANS UN MODULE DE SECURITE

(30) Priorität: 11.07.2005 DE 102005032311
(43) Veröffentlichungstag der Anmeldung: 21.05.2008
(73) Patentinhaber: Giesecke & Devrient GmbH, 81667 München (DE)
(72) Erfinder: WEISS, Dieter, 81825 München (DE); RANKL, Wolfgang, 81825 München (DE)
(74) Vertreter: Vierheilig, Achim
(86) Internationale Anmeldenummer: PCT/EP2006/006734
(87) Internationale Veröffentlichungsnummer: WO 2007/006535

(56) Entgegenhaltungen:
- US-A- 5 557 679
- US-A1- 2005 108 534
- US-B1- 6 799 155
- "Universal Mobile Telecommunications System (UMTS); Characteristics of the USIM application (3GPP TS 31.102 version 6.10.0 Release 6); ETSI TS 131 102" ETSI STANDARDS, EUROPEAN TELECOMMUNICATIONS STANDARDS INSTITUTE, SOPHIA-ANTIPO, FR, Bd. 3-T3, Nr. V6100, Juni 2005 (2005-06), XP014030679 ISSN: 0000-0001
- PEARSON S: "How Trusted Computers can Enhance for Privacy Preserving Mobile Applications" WORLD OF WIRELESS MOBILE AND MULTIMEDIA NETWORKS, 2005. WOWMOM 2005. SIXTH IEEE INTERNATIONAL SYMPOSIUM ON A TAORMINA-GIARDINI NAXOS, ITALY 13-16 JUNE 2005, PISCATAWAY, NJ, USA,IEEE, 13. Juni 2005 (2005-06-13), Seiten 609-613, XP010811156 ISBN: 0-7695-2342-0

## Beschreibung

Die Erfindung betrifft ein Verfahren zum nachträglichen Implementieren einer SIM-Funktionalität, mit deren Hilfe einem Mobilfunktelefon die Nutzung eines Mobilfunknetzes ermöglicht wird, in einem Sicherheitsmodul.

Mobilfunktelefone sind üblicherweise mit einer Telekommunikationskarte ausgerüstet, die als eine in das Mobilfunktelefon eingesteckte Chipkarte ausgebildet ist. Eine derartige Chipkarte weist das Format ID-1 oder ID-000 gemäß der internationalen Norm ISO 7810 auf. Dabei kommt häufig auch eine Kombination der genannten Formate zum Einsatz, indem in einen Kartenkörper im Format ID-1 ein Kartenkörper im Format ID-000 als ein Ausbrechteil integriert ist und der Chip im Bereich des letztgenannten Kartenkörpers angeordnet ist.

Die Telekommunikationskarte dient insbesondere dazu, einem Mobilfunkanbieter gegenüber einen Nachweis über eine Zugangsberechtigung zum Mobilfunknetz zu erbringen und wird auch als Subscriber Identity Module, abgekürzt SIM, bezeichnet. In der Telekommunikationskarte ist eine eindeutige Teilnehmeridentität gespeichert, die auch als International Mobile Subscriber Identity, abgekürzt IMSI, bezeichnet wird. Die Teilnehmeridendtät wird vor der Ausgabe der Telekommunikationskarte an den Benutzer im Rahmen einer Personalisierung, die in einer sicheren Umgebung durchgeführt wird, in die Telekommunikationskarte eingeschrieben.

Auf Basis der Teilnehmeridentität kann das Mobilfunksystem eine Authentisierung durchführen und dadurch ermitteln, ob das Mobilfunktelefon berechtigt ist, das Mobilfunksystem zu nutzen. Außerdem wird die Teilnehmeridentität für eine Zuordnung beispielsweise der für ein Telefongespräch berechneten Gesprächsgebühren zu dem Benutzer des Mobilfunktelefons benötigt.

Darüber hinaus ist die Telekommunikationskarte mit einer Reihe weiterer Funktionen ausgestattet. Diese Funktionen ermöglichen beispielsweise die Speicherung von Kurznachrichten, die Speicherung der zuletzt angewählten Rufnummer für eine Wahlwiederholung, die Speicherung von Rufnummern in einem persönlichen Telefonbuch oder die Speicherung von Kurzrufnummern, mit denen der Wählvorgang bei häufig verwendeten Rufnummern erleichtert wird usw.

Aus der EP 0 920 684 B1 ist ein Verfahren zum Auslesen und Einlesen von Daten bekannt, die auf einer Chipkarte gespeichert sind, welche einen Mikroprozessor, einen Speicher und einen.zusätzlichen Speicher aufweist. Der zusätzliche Speicher kann unter Umgehung des Betriebssystems ausgelesen bzw. beschrieben werden.

Die EP 0 981 803 B1 offenbart ein Verfahren zum Durchführen einer elektronischen Personalisierung und/oder Initialisierung einer Chipkarte. Die Personalisierung und/oder Initialisierung erfolgt mit Hilfe einer ersten Vorrichtung, welche die Chipkarte kontaktiert und einer zweiten Vorrichtung, die über die erste Vorrichtung mit der Chipkarte in Datenverbindung steht.

Die US-PS 5,557,679 offenbart ein Verfahren zur Personalisierung einer SIM-Karte. Die Karte wird in einen Kartenleser eingeführt, der über ein Kommunikationsnetzwerk mit einem Zentralrechner verbunden ist. Vom Zentralrechner werden die IMSI und ein Authentisierungsschlüssel in verschlüsselter Form an den Kartenleser übertragen. Der Kartenleser entschlüsselt die empfangenen Daten und leitet sie in einer Weise an die Karte weiter, durch die ein Ausspähen verhindert wird. Dies kann beispielsweise durch eine doppelte Verschlüsselung der Daten und Durchführung einer Entschlüsselung innerhalb der Karte erreicht werden.

US 2005/108534 A1 offenbart ein Verfahren zur Implementierung einer SIM-Funktionalität auf einer Open Platform und beschreibt, dass eine SIM Funktionalität in Form einer Applikation realisiert wird, die in einen geschützten Speicherbereich eines mobilen Endgerätes geladen wird. Im Verlauf einer Personalisierungsprozedur (Provisioning) werden Personalisierungsdaten (IMSI, Ki), die für eine Nutzung eines Mobilfunknetzes durch das mobile Endgerät benötigt werden, von einem Provider in verschlüsselter Form in den geschützten Speicherbereich geladen und mittels eines geheimen, in einem Sicherheitsmodul gespeicherten Schlüssel eines Benutzers, entschlüsselt, womit die SIM Applikation des mobilen Endgerätes mit Hilfe der entschlüsselten Personalisierungsdaten personalisiert wird.

Der Erfindung liegt die Aufgabe zugrunde, eine möglichst flexible und komfortable Nutzung eines Mobilfunktelefons zu ermöglichen.

Diese Aufgabe wird durch ein Verfahren mit der Merkmalskombination des Anspruchs 1 gelöst.

Mit dem erfindungsgemäßen Verfahren wird eine SIM-Funktionalität, mit deren Hilfe einem Mobilfunktelefon die Nutzung eines Mobilfunknetzes ermöglicht wird, nachträglich in einem Sicherheitsmodul implementiert. Hierzu wird die SIM-Funktionalität in Form einer Applikation realisiert, von der wenigstens ein erster Teil in das Sicherheitsmodul geladen wird. Weiterhin werden Personalisierungsdaten, die für eine Nutzung des Mobilfunknetzes durch das Mobilfunktelefon benötigt werden, von einem Provider auf direktem oder indirektem Weg in verschlüsselter Form an das Sicherheitsmodul übermittelt. Die verschlüsselten Personalisierungsdaten werden vom Sicherheitsmodul mit Hilfe eines im Sicherheitsmodul gespeicherten geheimen Schlüssels eines Benutzers entschlüsselt. Mit Hilfe der entschlüsselten Personalisierungsdaten wird das Sicherheitsmodul personalisiert.

Das erfindungsgemäße Verfahren bietet eine hohe Flexibilität, da die SIM-Funktionalität nachträglich in einem beliebigen Sicherheitsmodul implementiert werden kann, solange dieses gewisse Mindestvoraussetzungen im Hinblick auf die Sicherheit und die benötigten Ressourcen bietet. Nachträglich im Sinne der Erfindung bedeutet, dass die SIM-Funktionalität nicht bereits im Rahmen der Herstellung oder einer sich an die Herstellung anschließen-den Initialisierung bzw. Personalisierung im Sicherheitsmodul implementiert wird. Die Implementierung der SIM-Funktionalität erfolgt erst zu einem späteren Zeitpunkt, zu dem das Sicherheitsmodul bereits an einen Händler ausgeliefert oder an den Benutzer ausgegeben wurde.

Ein weiterer Vorteil des erfindungsgemäßen Verfahrens besteht darin, dass die Implementierung jederzeit durchgeführt werden kann und dem Benutzer große Freiheiten hinsichtlich der Wahl eines gewünschten Providers bietet. Der Aufwand für die Implementierung ist gering und es wird dennoch ein hoher Sicherheitsstandard eingehalten.

Vorzugsweise beinhaltet der erste Teil der Applikation sicherheitsrelevante Operationen. Dadurch wird ein hoher Sicherheitsstandard erreicht, da das Sicherheitsmodul vor Manipulationen geschützt ist. Ein zweiter Teil der Applikation kann in das Mobilfunktelefon geladen werden. Dadurch können die in der Regel sehr begrenzten Ressourcen des Sicherheitsmoduls geschont werden. Es ist aber auch möglich, die Applikation vollständig in das Sicherheitsmodul zu laden.

Die verschlüsselten Personalisierungsdaten können auf eine entsprechende Anfrage hin übermittelt werden, die der Benutzer an den Provider richtet. Dabei ist es von Vorteil, wenn die Anfrage den öffentlichen Schlüssel des Benutzers und/oder eine Benutzerkennung enthält, die insbesondere mit einem öffentlichen Schlüssel des Providers verschlüsselt ist. Dadurch wird der Provider in die Lage versetzt, sicherheitsrelevante Daten so zu verschlüsseln, dass sie nur vom Benutzer entschlüsselt werden können. Die Anfrage kann eine weitere Kennung enthalten, aufgrund derer dem Benutzer ein Dienstekontingent zugewiesen wird.

Der geheime Schlüssel des Benutzers kann bereits bei der Ausgabe des Sicherheitsmoduls an den Benutzer im Sicherheitsmodul gespeichert sein. Dies hat den Vorteil, dass keine Maßnahmen erforderlich sind, durch die ein Schlüssel zu einem späteren Zeitpunkt generiert oder an das Sicherheitsmodul übermittelt wird. Ebenso ist es auch möglich, dass der geheime Schlüssel des Benutzers nach der Ausgabe des Sicherheitsmoduls an den Benutzer generiert und im Sicherheitsmodul gespeichert wird. Dies reduziert das Risiko, dass der Schlüssel ausgespäht wird. Der geheime Schlüssel des Benutzers kann insbesondere vom Sicherheitsmodul generiert werden. Auf diese Weise lässt sich ein sehr hoher Sicherheitsstandard erreichen, da der geheime Schlüssel das Sicherheitsmodul zu keinem Zeitpunkt verlässt. Besonders vorteilhaft ist es, wenn der geheime Schlüssel des Benutzers gemeinsam mit dem öffentlichen Schlüssel des Benutzers als ein Schlüsselpaar generiert wird. Die Erzeugung derartiger Schlüsselpaare ist mit vergleichsweise geringem Aufwand möglich.

Die Datenübertragung zwischen dem Sicherheitsmodul und dem Provider kann über eine Luftschnittstelle des Mobilfunktelefons oder eine über ein sonstiges Gerät aufgebaute Online-Verbindung abgewickelt werden. Dabei hat die Verwendung der Luftschnittstelle den Vorteil, dass kein zusätzliches Gerät benötigt wird.

Als Sicherheitsmodul wird vorzugsweise ein anderer Datenträger als eine Chipkarte im Format ID-1 oder ID-000 der Norm ISO 7810 eingesetzt. Diese Formate entsprechen den üblicherweise bei Mobilfunktelefonen eingesetzten Telekommunikationskarten, die auch als SIM-Karten bezeichnet werden. Die Erfindung bezieht sich somit primär auf eine Ausbildung des Sicherheits-moduls, die von dem abweicht, was bei Mobilfunktelefonen üblich ist. Insbesondere wird als Sicherheitsmodul ein Trusted Platform Module oder eine Secure Multimedia Card eingesetzt.

Die Erfindung wird im folgenden anhand der in der Zeichnung dargestellten Ausführungsbeispiele näher erläutert.

Es zeigen
- Fig.: 1 eine schematische Darstellung einer ersten Variante des erfindungsgemäßen Verfahrens und

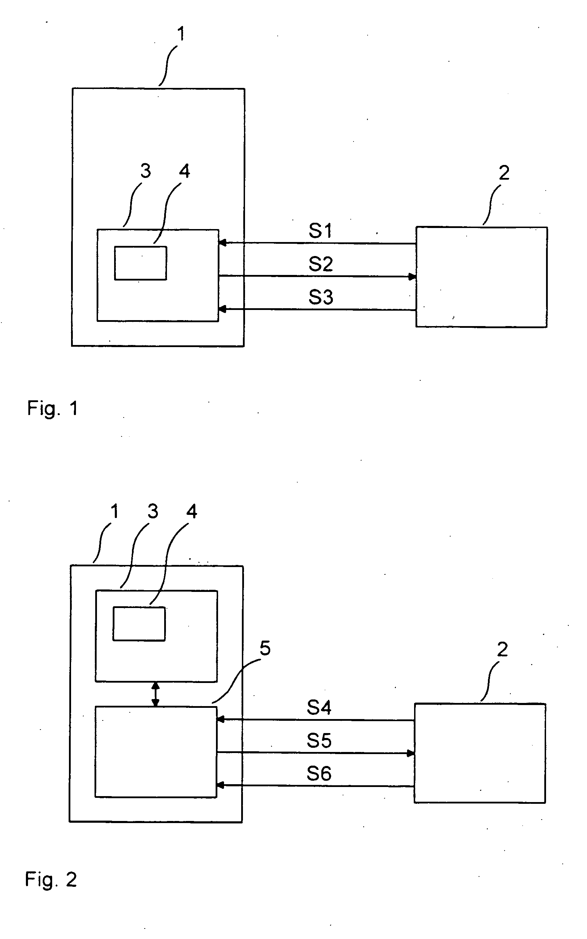

- Fig. 2: eine schematische Darstellung einer zweiten Variante des erfindungsgemäßen Verfahrens.

Fig. 1 zeigt eine schematische Darstellung einer ersten Variante des erfindungsgemäßen Verfahrens. Dargestellt sind ein Mobilfunktelefon 1 und ein Provider 2, der einen Zugang zu einem Mobilfunknetz anbietet. Das Mobilfunktelefon 1 weist eine Secure Multimedia Card (SMMC) 3 auf, die in das Mobilfunktelefon 1 eingesteckt ist. Der Aufbau des Mobilfunktelefons 1 selbst ist für sich genommen bekannt und in Fig. 1 nicht näher dargestellt.

Die Secure Multimedia Card 3 stellt ein kompaktes elektronisches Speichermedium dar, das kartenförmig ausgebildet ist. Ein Teil der Speicherkapazität der Secure Multimedia Card 3 ist in Form eines zugriffsgeschützten Speichers 4 realisiert. Im Speicher 4 sind ein öffentlicher Schlüssel und ein geheimer Schlüssel abgelegt. Der öffentliche Schlüssel wird auch als Public Key, abgekürzt PK, bezeichnet. Der geheime Schlüssel wird auch als Secret Key, abgekürzt SK, bezeichnet. Der öffentliche Schlüssel PK und der geheime Schlüssel SK werden beispielsweise vor der Ausgabe der Secure Multimedia Card 3 an einen Benutzer als ein Schlüsselpaar generiert und im Speicher 4 der Secure Multimedia Card 3 abgelegt. Ebenso ist es auch möglich, ein solches Schlüsselpaar nach der Ausgabe der Secure Multimedia Card 3 zu generieren und im Speicher 4 der Secure Multimedia Card 3 abzulegen. Zusätzlich zur reinen Speicherfunktion ist die Secure Multimedia Card 3 in der Lage, Algorithmen manipulationsgeschützt auszuführen. Dadurch ist es beispielsweise möglich, dass das Schlüsselpaar von der Secure Multimedia Card 3 selbst generiert wird.

Zusätzlich zur dargestellten Secure Multimedia Card 3 kann das Mobilfunktelefon 1 eine nicht figürlich dargestellte Telekommunikationskarte aufweisen, die auch als Subscriber Identity Module, abgekürzt SIM, bezeichnet wird. Eine derartige Telekommunikationskarte ist als eine Chipkarte in dem durch die internationale Norm ISO 7810 vorgegebenen Format ID-1 oder ID-000 ausgebildet. Die Telekommunikationskarte dient dazu, eine Zugangsberechtigung zu einem Mobilfunknetz nachzuweisen und dem Mobilfunktelefon 1 dadurch einen Zugang zum Mobilfunknetz zu verschaffen. Hierfür ist in der Telekommunikationskarte eine eindeutige Benutzerkennung gespeichert, die als International Mobile Subscriber Identity, abgekürzt IMSI, bezeichnet wird. Das Mobilfunktelefon 1 kann auch ohne die Telekommunikationskarte betrieben werden, da im Rahmen der Erfindung die Funktionalität der Telekommunikationskarte von der Secure Multimedia Card 3 übernommen wird. Die Funktionalität der Telekommunikationskarte wird im folgenden als SIM-Funktionalität bezeichnet. Um die Secure Multimedia Card 3 mit der SIM-Funktionalität auszustatten, kann folgendermaßen vorgegangen werden:

Zunächst wird in einem Übertragungsschritt S1 die SIM-Funktionalität in Form einer Applikation, d. h. einer Saftware, welche die Funktionsweise der Telekommunikationskarte nachbildet, vom Provider 2 an die Secure Multimedia Card 3 übermittelt und die Secure Multimedia Card 3 mit der übermittelten Applikation geladen. Die Übermittlung der Applikation kann beispielsweise mit Hilfe einer Online-Verbindung zwischen einem Server des Providers 2 und einem Personalcomputer des Benutzers erfolgen. Ebenso kann die Übermittlung auch vom Provider 2 an einen Händler erfolgen, der die Applikation dann in die Secure Multimedia Card 3 des Benutzers lädt. Weiterhin ist es auch möglich, dass die Applikation vom Provider 2 an das Mobilfunktelefon 1 übermittelt wird, in dem sich die Secure Multimedia Card 3 befindet. Für die Übermittlung der Applikation sind keine Sicherheitsmaßnahmen erforderlich, da diese keine geheimen Daten enthält.

Im Anschluss an Übertragungsschritt S1 wird ein Übertragungsschritt S2 ausgeführt, in dem der im Speicher 4 der Secure Multimedia Card 3 gespeicherte öffentliche Schlüssel PK und eine Identifikationsnummer ID von der Secure Multimedia Card 3 an den Provider 2 übermittelt werden. Für die Übermittlung stehen die gleichen Übertragungswege wie bei Übertragungsschritt S1 zur Verfügung. Die Identifikationsnummer ID kann ebenfalls im Speicher 4 der Secure Multimedia Card 3 gespeichert sein und wird vorzugsweise in verschlüsselter Form übertragen. Die Verschlüsselung wird insbesondere von der Secure Multimedia Card 3 durchgeführt, wobei als Schlüssel ein öffentlicher Schlüssel des Providers 2 verwendet werden kann. Bei einer Weiterbildung des erfindungsgemäßen Verfahrens wird zusätzlich zur Identifikationsnummer ID eine weitere Nummer an den Provider 2 übertragen. Diese weitere Nummer repräsentiert beispielsweise eine bestimmte Zahl von Kurznachrichten (SMS), die der Benutzer kostenfrei versenden kann. Die weitere Nummer kann dem Benutzer beispielsweise mittels einer Rubbelkarte als ein Werbegeschenk übergeben werden.

In Reaktion auf Übertragungsschritt S2 übermittelt der Provider 2 in einem Übertragungsschritt S3 Personalisierungsdaten an die Secure Multimedia Card 3, die mit dem in Übertragungsschritt S2 zugesandten öffentlichen Schlüssel PK des Benutzers verschlüsselt sind. Die Personalisierungsdaten enthalten insbesondere eine IMSI. Auch für den Übertragungsschritt S3 stehen die bereits erwähnten Übertragungswege zur Verfügung. Die Ausführung des Übertragungsschritts S3 kann davon abhängig gemacht werden, dass der Provider 2 vom Benutzer einen entsprechenden Antrag erhalten hat.

Die Secure Multimedia Card 3 entschlüsselt die empfangenen Personalisierungsdaten und führt selbständig eine Personalisierung durch. Nach einer ordnungsgemäßen Durchführung der Personalisierung kann die Secure Multimedia Card 3 wie eine Telekommunikationskarte genutzt werden, d. h. sie verfügt über die bereits erwähnte SIM-Funktionalität. Beispielsweise können mit dem Mobilfunktelefon 1 Telefongespräche geführt werden, ohne dass hierfür zusätzlich eine Telekommunikationskarte erforderlich ist. Bei der Nutzung der SIM-Funktionalität der Secure Multimedia Card 3 wird die in Übertragungsschritt S1 geladene Applikation von der Secure Multimedia Card 3 selbst ausgeführt, die dabei auf die im Rahmen der Personalisierung gespeicherten Daten zugreifen kann. Alternativ dazu ist es auch möglich, dass die Secure Multimedia Card 3 nur sicherheitsrelevante Teile der Applikation ausführt und die Applikation im übrigen vom Mobilfunktelefon 1 ausgeführt wird. Allerdings ist es hierfür erforderlich, die Implementierung der SIM-Funktionalität in einer abgewandelten Form durchzuführen. Dies wird anhand von Fig. 2 näher erläutert:

Um die im Übertragungsschritt S1 übermittelte Applikation vor einer Nutzung durch unbefugte Dritte zu schützen, kann diese mit dem öffentlichen Schlüssel PK des Benutzers verschlüsselt übertragen werden. In diesem Fall erfolgt die Übertragung erst nach Erhalt dieses öffentlichen Schlüssels PK seitens des Providers 2.

Fig. 2 zeigt eine schematische Darstellung einer zweiten Variante des erfindungsgemäßen Verfahrens. Bei der zweiten Variante wird die Implementierung der SIM-Funktionalität so durchgeführt, dass später bei der Nutzung der SIM-Funktionalität die Applikation zum Teil vom Mobilfunktelefon 1 und zum Teil von der Secure Multimedia Card 3 ausgeführt wird. Für die Ausführung der Applikation weist das Mobilfunktelefon 1 einen Applikationsprozessor 5 auf, der auch sonstige Applikationen des Mobilfunktelefons 1 ausführt und somit auch beim Mobilfunktelefon 1 gemäß Fig.1 vorhanden ist. Dort ist der Applikationsprozessor 5 des Mobilfunktelefons 1 allerdings für die Erfindung nicht von Bedeutung und deshalb nicht dargestellt. Zwischen dem Applikationsprozessor 5 und der Secure Multimedia Card 3 besteht eine Datenverbindung.

Bei der zweiten Variante des erfindungsgemäßen Verfahrens wird in einem Übertragungsschritt S4 die Applikation, die die SIM-Funktionalität beinhaltet, vom Provider 2 an den Applikationsprozessor 5 des Mobilfunktelefons 1 übermittelt. Im Applikationsprozessor 5 werden die Teile der Applikation gespeichert, die später vom Applikationsprozessor 5 ausgeführt werden. Die sonstigen Teile der Applikation, die von der Secure Multimedia Card 3 ausgeführt werden sollen, werden vom Applikationsprozessor 5 an die Secure Multimedia Card 3 weitergeleitet und dort gespeichert. Beispielsweise wird in der Secure Multimedia Card 3 ein GSM-Algorithmus gespeichert, mit dessen Hilfe sich das Mobilfunktelefon 1 im Mobilfunknetz anmeldet. GSM steht dabei für Global System for Mobile Communications.

Auf Übertragungsschritt S4 folgt ein Übertragungsschritt S5, in dem der öffentliche Schlüssel PK und die Identifikationsnummer ID des Benutzers vom Applikationsprozessor 5 des Mobilfunktelefons 1 an den Provider 2 übermittelt werden. Diese Daten werden hierzu in der bei der ersten Verfahrensvariante beschriebenen Weise bereitgestellt. Danach wird ein Übertragungsschritt S6 ausgeführt, in dem der Provider 2 die mit dem öffentlichen Schlüssel des Benutzers verschlüsselten Personalisierungsdaten an den Applikationsprozessor 5 übermittelt. Der Applikationsprozessor 5 leitet die verschlüsselten Personalisierungsdaten an die Secure Multimedia Card 3 weiter, die diese entschlüsselt und für die Durchführung einer Personalisierung verwendet.

Die Übertragungswege können bei der zweiten Verfahrensvariante analog zur ersten Verfahrensvariante ausgebildet sein, wobei ggf. zusätzlich der Applikationsprozessor 5 zu berücksichtigen ist. Auch im übrigen gelten die Ausführungen zur ersten Verfahrensvariante für die zweite Verfahrensvariante analog, soweit nichts anderes beschrieben ist.

Auch bei der Implementierung der SIM-Funktionalität gemäß der zweiten Verfahrensvariante kann die Secure Multimedia Card 3 danach dafür verwendet werden, dem Mobilfunktelefon 1 einen Zugang zum Mobilfunknetz zu ermöglichen. Allerdings wird von der Secure Multimedia Card 3 nicht die gesamte SIM-Funktionalität, sondern es werden lediglich deren sicherheitsrelevante Teile zur Verfügung gestellt. Im übrigen ist die SIM-Funktionalität im Applikationsprozessor 5 des Mobilfunktelefons 1 realisiert.

Die vorstehenden Ausführungen gelten gleichermaßen für den UMTS-Bereich. UMTS steht dabei Universal Mobile Telecommunication System und bezeichnet einen speziellen Kommunikationsstandard. An die Stelle der SIM tritt dann eine USIM (Universal Subscriber Identity Module).

Das erfindungsgemäße Verfahren kann auch bei anderen Datenträgern als einer Secure Multimedia Card 3 eingesetzt werden. Beispielsweise kommen dabei sonstige Speicherkarten für elektronische Geräte in Frage, soweit sie eine ausreichende Sicherheit gewährleisten und in der Lage sind, eine Applikation auszuführen. Insbesondere eignet sich auch ein Trusted Platform Module, dessen primäre Aufgabe es ist, die Authentizität eines elektronischen Geräts nachzuweisen und das in unterschiedlichen Realisierungsformen verfügbar ist.

## Patentansprüche

1. Verfahren zum nachträglichen Implementieren einer SIM-Funktionalität, mit deren Hilfe einem Mobilfunktelefon (1) die Nutzung eines Mobilfunknetzes ermöglicht wird, in einem Sicherheitsmodul (3), wobei
- die SIM-Funktionalität in Form einer Applikation realisiert wird, von der wenigstens ein erster Teil in das Sicherheitsmodul (3) geladen wird,
- Personalisierungsdaten, die für eine Nutzung des Mobilfunknetzes durch das Mobilfunktelefon (1) benötigt werden, von einem Provider (2) auf direktem oder indirektem Weg in verschlüsselter Form an das Sicherheitsmodul (3) übermittelt werden,
- die verschlüsselten Personalisierungsdaten vom Sicherheitsmodul (3) mittels eines im Sicherheitsmodul (3) gespeicherten geheimen Schlüssels eines Benutzers entschlüsselt werden und
- das Sicherheitsmodul (3) mit Hilfe der entschlüsselten Personalisierungsdaten personalisiert wird.

2. Verfahren nach Anspruch 1, **dadurch gekennzeichnet, dass** der erste Teil der Applikation sicherheitsrelevante Operationen beinhaltet.

3. Verfahren nach einem der vorhergehenden Ansprüche, **dadurch gekennzeichnet, dass** ein zweiter Teil der Applikation in das Mobilfunktelefon (1) geladen wird.

4. Verfahren nach einem der vorhergehenden Ansprüche, **dadurch gekennzeichnet, dass** die verschlüsselten Personalisierungsdaten auf eine entsprechende Anfrage hin übermittelt werden, die der Benutzer an den Provider (2) richtet.

5. Verfahren nach Anspruch 4, **dadurch gekennzeichnet, dass** die Anfrage den öffentlichen Schlüssel des Benutzers und/oder eine Benutzerkennung enthält, die insbesondere mit einem öffentlichen Schlüssel des Providers (2) verschlüsselt ist.

6. Verfahren nach einem der Ansprüche 4 oder 5, **dadurch gekennzeichnet, dass** die Anfrage eine weitere Kennung enthält, aufgrund derer dem Benutzer ein Dienstekontingent zugewiesen wird.

7. Verfahren nach einem der vorhergehenden Ansprüche, **dadurch gekennzeichnet, dass** der geheime Schlüssel des Benutzers bereits bei der Ausgabe des Sicherheitsmoduls (3) an den Benutzer im Sicherheitsmodul (3) gespeichert ist.

8. Verfahren nach einem der Ansprüche 1 bis 6, **dadurch gekennzeichnet, dass** der geheime Schlüssel des Benutzers nach der Ausgabe des Sicherheitsmoduls (3) an den Benutzer generiert und im Sicherheitsmodul (3) gespeichert wird.

9. Verfahren nach Anspruch 8, **dadurch gekennzeichnet, dass** der geheime Schlüssel des Benutzers vom Sicherheitsmodul (3) generiert wird.

10. Verfahren nach einem der Ansprüche 8 oder 9, **dadurch gekennzeichnet, dass** der geheime Schlüssel des Benutzers gemeinsam mit dem öffentlichen Schlüssel des Benutzers als ein Schlüsselpaar generiert wird.

11. Verfahren nach einem der vorhergehenden Ansprüche, **dadurch gekennzeichnet, dass** die Datenübertragung zwischen dem Sicherheitsmodul (3) und dem Provider (2) über eine Luftschnittstelle des Mobilfunktelefons (1) oder eine über ein sonstiges Gerät aufgebaute Online-Verbindung abgewickelt wird.

12. Verfahren nach einem der vorhergehenden Ansprüche, **dadurch gekennzeichnet, dass** als Sicherheitsmodul (3) ein anderer Datenträger als eine Chipkarte im Format ID-1 oder ID-000 der Norm ISO 7810 eingesetzt wird.

13. Verfahren nach einem der vorhergehenden Ansprüche, **dadurch gekennzeichnet, dass** als Sicherheitsmodul (3) ein Trusted Platform Module oder eine Secure Multimedia Card eingesetzt wird.

## Claims

1. A method for subsequently implementing a SIM functionality, with the help of which a mobile telephone (1) is enabled to use a mobile radio network, in a security module (3), wherein
- the SIM functionality is realized in the form of an application, of which at least a first part is loaded into the security module (3),
- personalizing data, which are required for a use of the mobile radio network by the mobile telephone (1), are transmitted from a provider (2) to the security module (3) in encrypted form on a direct or indirect way,
- the encrypted personalizing data are decrypted by the security module (3) by means of a secret key of a user stored in the security module (3) and
- the security module (3) is personalized with the help of the decrypted personalizing data.

2. The method according to claim 1, **characterized in that** the first part of the application comprises security-relevant operations.

3. The method according to any of the above claims, **characterized in that** a second part of the application is loaded into the mobile telephone (1).

4. The method according to any of the above claims, **characterized in that** the encrypted personalizing data are transmitted upon a respective inquiry, which the user directs to the provider (2).

5. The method according to claim 4, **characterized in that** the inquiry contains the public key of the user and/or a user identification, which in particular is encrypted with a public key of the provider (2).

6. The method according to any of claims 4 or 5, **characterized in that** the inquiry contains a further identification, on the basis of which a service contingent is allocated to the user.

7. The method according to any of the above claims, **characterized in that** the secret key of the user is already stored in the security module (3) when the security module (3) is handed out to the user.

8. The method according to any of claims 1 to 6, **characterized in that** the secret key of the user is generated and stored in the security module (3) after the security module (3) has been handed out to the user.

9. The method according to claim 8, **characterized in that** the secret key of the user is generated by the security module (3).

10. The method according to any of claims 8 or 9, **characterized in that** the secret key of the user is generated together with the public key of the user as a key pair.

11. The method according to any of the above claims, **characterized in that** the data transmission between the security module (3) and the provider (2) is effected via an air interface of the mobile telephone (1) or an online connection set up via any other device.

12. The method according to any of the above claims, **characterized in that** as a security module (3) a data carrier different from a chip card of the format ID-1 or ID-000 of the standard ISO 7810 is used.

13. The method according to any of the above claims, **characterized in that** as a security module (3) a trusted platform module or a secure multimedia card is used.

## Revendications

1. Procédé d'implémentation ultérieure d'une fonctionnalité SIM à l'aide de laquelle l'utilisation d'un réseau de téléphonie mobile est rendue possible à un radiotéléphone mobile (1), dans un module de sécurité (3),
■ la fonctionnalité SIM étant réalisée sous forme d'une application dont au moins une première partie est chargée dans le module de sécurité (3),
■ les données de personnalisation requises pour une utilisation du réseau de téléphonie mobile par radiotéléphone mobile (1) étant transmises au module de sécurité (3) par un fournisseur (2) par voie directe ou indirecte sous forme codée ,
■ les données de personnalisation codées du module de sécurité (3) étant décodées au moyen d'une clé secrète d'un utilisateur mémorisée dans le module de sécurité (3) et
■ le module de sécurité (3) étant personnalisé à l'aide des données de personnalisation décodées.

2. Procédé selon la revendication 1, **caractérisé en ce que** la première partie de l'application comporte des opérations importantes pour la sécurité.

3. Procédé selon une des revendications précédentes, **caractérisé en ce qu'**une deuxième partie de l'application est chargée dans le radiotéléphone mobile (1).

4. Procédé selon une des revendications précédentes, **caractérisé en ce que** les données de personnalisation codées sont transmises à la suite d'une demande correspondante adressée au fournisseur (2) par l'utilisateur.

5. Procédé selon la revendication 4, **caractérisé en ce que** la demande comporte la clé publique de l'utilisateur et/ou un identificateur d'utilisateur qui est notamment codé(e) avec une clé publique du fournisseur (2).

6. Procédé selon une des revendications 4 ou 5, **caractérisé en ce que** la demande comporte un autre identificateur sur la base duquel un contingent de services est affecté à l'utilisateur.

7. Procédé selon une des revendications précédentes, **caractérisé en ce que** la clé secrète de l'utilisateur est déjà mémorisée dans le module de sécurité (3) lors de la remise du module de sécurité (3) à l'utilisateur.

8. Procédé selon une des revendications de 1 à 6, **caractérisé en ce que** la clé secrète de l'utilisateur est générée après la remise du module de sécurité (3) à l'utilisateur et mise en mémoire dans le module de sécurité (3).

9. Procédé selon la revendication 8, **caractérisé en ce que** la clé secrète de l'utilisateur est générée par le module de sécurité (3).

10. Procédé selon une des revendications de 8 ou 9, **caractérisé en ce que** la clé secrète de l'utilisateur est générée conjointement avec la clé publique de l'utilisateur en tant que paire de clés.

11. Procédé selon une des revendications précédentes, **caractérisé en ce que** la transmission des données entre le module de sécurité (3) et le fournisseur (2) s'effectue par l'intermédiaire d'une interface air du radiotéléphone mobile (1) ou bien par une connexion en ligne établie par l'intermédiaire d'un autre appareil.

12. Procédé selon une des revendications précédentes, **caractérisé en ce qu'**un autre support de données qu'une carte à puce de format ID-1 ou ID-000 de la norme ISO 7810 est utilisé en tant que module de sécurité (3).

13. Procédé selon une des revendications précédentes, **caractérisé en ce qu'**un Trusted Platform Module ou bien une Secure Multimedia Card est utilisé(e) en tant que module de sécurité (3).
